# EUROPEAN PATENT APPLICATION

(11) **EP 1 248 467 A2**
(43) Date of publication of application: **09.10.2002**
(21) Application number: 02003127.4
(22) Date of filing: 13.02.2002
(51) Int. Cl.: H04N 7/26, G06T 1/00

(54) **Digital watermark embedding method, digital watermark embedding apparatus and recording medium having a digital watermark**

(30) Priority: 13.02.2001 JP 2001035007
(71) Applicant: Pioneer Corporation, Tokyo-to (JP)
(72) Inventor: Moriyama, Yoshiaki Pioneer Corp., Tokorosawa Works, Saitama-ken (JP)
(74) Representative: Reinhard - Skuhra - Weise & Partner

(57) **Abstract**

This invention provides a digital watermark embedding method that is a method of embedding a digital watermark (11a), which is generated according to specific rules, in contents (11) comprising digital data, and sets an end position of the embedded watermark (11a) in the contents (11) before an end of the contents (11).

## Description

This invention is related to a digital watermark embedding method for embedding a digital watermark in order to restrict copying contents from digital data.

With the realization of digital television broadcasting, distribution of video images using a digital signal has become commonplace. Also, video recorders that record video images as digital data onto an optical disk or magnetic tape have become widespread. By making it possible to record video images as digital data, it becomes possible to make copies without deteriorating the video image. Therefore, from the aspect of copyrights, it is necessary to restrict the copying of video images.

The digital watermark technique disclosed in EP 1006722A2 (corresponding to Japanese Patent Application Laid-Open 2000-173175) is one technique of restricting copying of video images, and is a technique of embedding data in the digital video image for restricting copying. Hereafter, the data for restricting copying that is embedded in the digital image is called a digital watermark. A digital watermark is embedded such that it is hidden in the video. Therefore, there is none or very little decrease in quality of the video even with the digital watermark embedded in the video. Also, a person who receives a video having an embedded digital watermark can probably not tell that there is a digital watermark in that video, so it is extremely difficult to remove the digital watermark from the video.

In EP1006722A2, a system, which uses a digital watermark that indicates that copying is prohibited and a digital watermark that indicates that first-generation copying is allowed, is disclosed. With this system, it is possible to manage the number of times copying is allowed, so copyright problems do not occur, and it is possible for the viewer of a television broadcast to view a transmitted video without putting constraints on the broadcast time.

In this system, when the digital video is input to the video recorder, the video recorder determines whether or not there is a digital watermark in the video. When there is a digital watermark and that digital watermark indicates that copying is prohibited, the video recorder will not record that video. Moreover, when there is no digital watermark, or when there is a digital watermark and that digital watermark indicates that first-generation copying is allowed, the video recorder determines that it is allowed to record that video and records the video on an optical disk or the like.

In the case of broadcasting a video from a broadcast station, normally, a plurality of video contents are broadcast continuously. Therefore, control data for copying the video, or in other words, data such as data prohibiting copying, data allowing first-generation copying or data allowing copying, are broadcast continuously together with differing video contents. For example, it is possible that video contents, for which copying is allowed, will be broadcast after broadcasting video contents, for which copying is prohibited.

However, in order for the video recorder to detect whether or not there is a digital watermark requires a certain amount of time (for example 1 to 30 seconds). Therefore, it is not possible for detection to quickly follow the switching of video contents, and so for the beginning part of the following video contents, control data that differ from the actual control data are identified by the video recorder. For example, even though the video contents are switched from prohibiting copying to allowing copying, the beginning part of the following video content is prohibited from being copied so it is not possible to copy the beginning part, or even though the video contents change from allowing first-generation copying to allowing copying, there is a problem that a digital watermark indicating that copying is finished is embedded at the beginning of the following video contents, so the recorder scrambles the contents.

### SUMMARY OF THE INVENTION

The object of this invention is to provide a method of embedding a digital watermark that will do away with the problem of the delay in detecting the control data.

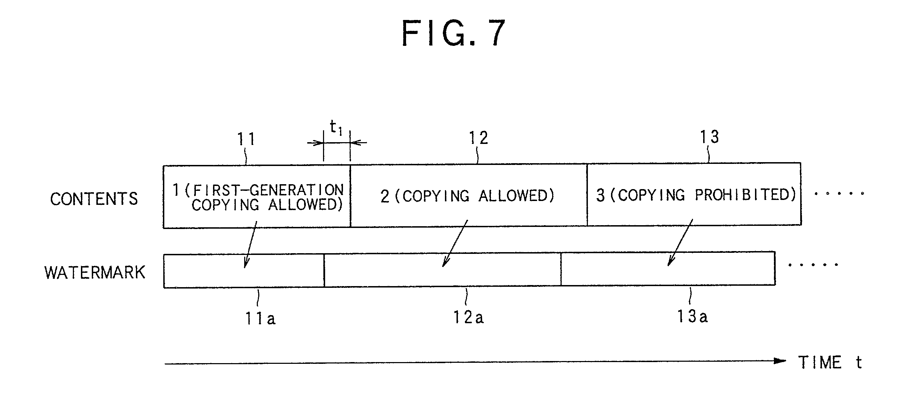

The digital watermark embedding method of this invention embeds a digital watermark, which is a signal generated according to specific rules, in contents comprising digital data, and sets an end position of the digital watermark (11a) in the contents (11) before an end of the contents (11). (See FIG. 7.)

With this digital watermark embedding method, the end position of the digital watermark embedded in the contents is set before the end of the contents, so even when there is a delay in detecting the digital watermark in the received contents, it is possible to nearly match the point of switching to the next contents with the point where the end of the embedded digital watermark is detected. Therefore, it is possible to remove problems at the beginning of the following contents. For example, in the case when the digital watermark (11a) for the previous contents indicates that copying is prohibited, it is possible to remove the problem of not being able to record the beginning of the following contents, even though copying of the following contents is allowed; or in the case when the digital watermark (11a) of the previous contents indicates that first-generation copying is allowed, it is possible to remove the problem of inserting a digital watermark at the beginning of the following contents, indicating that the contents have already been copied, and scrambling the contents.

A difference (t1) between the end position of the embedded digital watermark (11a) and the end of the contents (11) corresponds to or is greater than the delay in detecting the digital watermark (11a) in the contents (11).

In this case, it is possible to nearly match the end of the contents with the timing for detecting the end of the embedded digital watermark, or it is possible remove problems at the beginning of the following contents.

The digital watermark embedding method of this invention is a method of embedding the digital watermark, which is a signal generated according to specific rules, in contents comprising digital data, and sets a starting position of the embedded digital watermark (13a) in the contents (13) before a starting point of the contents (13). (See FIG. 7.)

With this digital watermark embedding method, the starting position of the embedded digital watermark in the contents is set before the starting point of the contents, so it is possible to nearly match the starting point of the contents with the point where the start of the embedded digital watermark is detected, even when there is a delay in detecting the digital watermark from the received contents. Therefore, it is possible to remove problems at the beginning of the contents. For example, in the case when the digital watermark (11a) for the previous contents indicates that copying is prohibited, it is possible to remove the problem of not being able to record the beginning of the contents, even though copying of the contents is allowed; or in the case when the digital watermark (11a) of the previous contents indicates that first-generation copying is allowed, it is possible to remove the problem of inserting a digital watermark at the beginning of the contents, indicating that the contents have already been copied, and scrambling the contents.

A difference between the starting position of the embedded digital watermark (13a) and a starting position of the contents (13) corresponds to or is greater than the delay in detecting the digital watermark (13a) in the contents (13).

In this case, it is possible to nearly match the starting point of the contents with the timing for detecting the end of the embedded digital watermark, or it is possible remove problems at the beginning of the contents.

The digital watermark embedding method of this invention is a method of embedding the digital watermark, which is a signal generated according to specific rules, in a plurality of continuous contents comprising digital data, and sets a change position of the digital watermarks (11a, 12a or 13a) in adjacent contents (11, 12 or 12, 13) before a change position of the adjacent contents (11, 12 or 12, 13). (See FIG. 7.)

With this digital watermark embedding method, the change position of the digital watermarks is set in the adjacent contents before the change position of the adjacent contents, so it is possible to nearly match the point of changing from the previous contents to the following contents with the point where the change in digital watermarks in these contents is detected, even when there is a delay in detecting the digital watermarks in the received contents. Therefore, it is possible to remove problems at the end of the previous contents or at the beginning of the following contents. For example, in the case when the digital watermark (11a) for the previous contents indicates that copying is prohibited, it is possible to remove the problem of not being able to record the beginning of the following contents, even though copying of the following contents is allowed; or in the case when the digital watermark (11a) of the previous contents indicates that first-generation copying is allowed, it is possible to remove the problem of inserting a digital watermark at the beginning of the following contents, indicating that the contents have already been copied, and scrambling the contents.

In the case that of a plurality of continuous contents, copying is allowed for a previous contents, a starting position of the embedded digital watermark in following contents that follow the previous contents is set at a starting point of the following contents.

In this case, the area where the digital watermark is embedded in the following contents does not come in contact with the previous contents, so problems such as not being able to record the end part of the previous contents does not occur.

A difference between the change position of the digital watermarks (11a, 12a or 12a, 13a) and the change position of adjacent contents (11, 12 or 12, 13) corresponds to or is greater than the delay in detecting the digital watermarks (11a, 12a or 12a, 13a) in the received contents (11, 12 or 12, 13).

In this case, it is possible to nearly match the change in contents with the timing for detecting the change in digital watermarks, or it is possible to remove problems at the beginning of the following contents.

The digital watermark embedding apparatus (401) of this invention is an apparatus that embeds a digital watermark, which is a signal generated according to specific rules, in contents comprising digital data, and it sets an end position of the embedded digital watermark (11a) in the contents (11) before an end of the contents (11).

With this digital watermark embedding apparatus, the end position of the digital watermark embedded in the contents is set before the end of the contents, so even when there is a delay in detecting the digital watermark in the received contents, it is possible to nearly match the point of switching to the next contents with the point where the end of the embedded digital watermark is detected. Therefore, it is possible to remove problems at the beginning of the following contents. For example, in the case when the digital watermark (11a) for the previous contents indicates that copying is prohibited, it is possible to remove the problem of not being able to record the beginning of the following contents, even though copying of the following contents is allowed; or in the case when the digital watermark (11a) of the previous contents indicates that first-generation copying is allowed, it is possible to remove the problem of inserting a digital watermark at the beginning of the following contents, indicating that the contents have already been copied, and scrambling the contents.

A difference (t1) between the end position of the embedded digital watermark (11a) and the end of the contents (11) corresponds to or is greater than the delay in detecting the digital watermark (11a) in the contents (11).

In this case, it is possible to nearly match the end of the contents with the timing for detecting the end of the embedded digital watermark, or it is possible remove problems at the beginning of the following contents.

The digital watermark embedding apparatus of this invention is an apparatus for embedding a digital watermark, which is a signal generated according to specific rules, in contents comprising digital data, and sets a starting position of the embedded digital watermark (13a) in the contents (13) before a starting point of the contents (13).

With this digital watermark embedding apparatus, the starting position of the embedded digital watermark in the contents is set before the starting point of the contents, so it is possible to nearly match the starting point of the contents with the point where the start of the embedded digital watermark is detected, even when there is a delay in detecting the digital watermark from the received contents. Therefore, it is possible to remove problems at the beginning of the contents. For example, in the case when the digital watermark (11a) for the previous contents indicates that copying is prohibited, it is possible to remove the problem of not being able to record the beginning of the contents, even though copying of the contents is allowed; or in the case when the digital watermark (11a) of the previous contents indicates that first-generation copying is allowed, it is possible to remove the problem of inserting a digital watermark at the beginning of the contents, indicating that the contents have already been copied, and scrambling the contents.

A difference between the starting position of the embedded digital watermark (13a) and a starting position of the contents (13) corresponds to or is greater than the delay in detecting the digital watermark (13a) in the contents (13).

In this case, it is possible to nearly match the starting point of the contents with the timing for detecting the end of the embedded digital watermark, or it is possible remove problems at the beginning of the contents.

The digital watermark embedding apparatus of this invention is an apparatus for embedding a digital watermark, which is a signal generated according to specific rules, in a plurality of continuous contents comprising digital data, and sets a change position of the digital watermarks (11a, 12a or 12a, 13a) in adjacent contents (11, 12 or 12, 13) before a change position of the adjacent contents (11, 12 or 12, 13).

With this digital watermark embedding apparatus, the change position of the digital watermarks is set in the adjacent contents before the change position of the adjacent contents, so it is possible to nearly match the point of changing from the previous contents to the following contents with the point where the change in digital watermarks in these contents is detected, even when there is a delay in detecting the digital watermarks in the received contents. Therefore, it is possible to remove problems at the end of the previous contents or at the beginning of the following contents. For example, in the case when the digital watermark (11a) for the previous contents indicates that copying is prohibited, it is possible to remove the problem of not being able to record the beginning of the following contents, even though copying of the following contents is allowed; or in the case when the digital watermark (11a) of the previous contents indicates that first-generation copying is allowed, it is possible to remove the problem of inserting a digital watermark at the beginning of the following contents, indicating that the contents have already been copied, and scrambling the contents.

In the case that of a plurality of continuous contents, copying is allowed for a previous contents, a starting position of the embedded digital watermark in following contents that follow the previous contents is set at a starting point of the following contents.

In this case, the area where the digital watermark is embedded in the following contents does not come in contact with the previous contents, so problems such as not being able to record the end part of the previous contents does not occur.

A difference between the change position of the digital watermarks (11a, 12a or 12a, 13a) and the change position of adjacent contents (11, 12 or 12, 13) corresponds to or is greater than the delay in detecting the digital watermarks (11a, 12a or 12a, 13a) in the received contents (11, 12 or 12, 13).

In this case, it is possible to nearly match the change in contents with the timing for detecting the change in digital watermarks, or it is possible to remove problems at the beginning of the following contents.

The recording medium having a digital watermark of this invention is a recording medium having a digital watermark, which is a signal generated according to specific rules, embedded in contents comprising digital data, and where an end position of the digital watermark (11a) is set in the contents (11) before an end of the contents (11).

With this recording medium having a digital watermark, the end position of the digital watermark embedded in the contents is set before the end of the contents, so even when there is a delay in detecting the digital watermark in the received contents, it is possible to nearly match the point of switching to the next contents with the point where the end of the embedded digital watermark is detected. Therefore, it is possible to remove problems at the beginning of the following contents. For example, in the case when the digital watermark (11a) for the previous contents indicates that copying is prohibited, it is possible to remove the problem of not being able to record the beginning of the following contents, even though copying of the following contents is allowed; or in the case when the digital watermark (11a) of the previous contents indicates that first-generation copying is allowed, it is possible to remove the problem of inserting a digital watermark at the beginning of the following contents, indicating that the contents have already been copied, and scrambling the contents.

A difference (t1) between the end position of the embedded digital watermark (11a) and the end of the contents (11) corresponds to or is greater than the delay in detecting the digital watermark (11a) in the contents (11).

In this case, it is possible to nearly match the end of the contents with the timing for detecting the end of the embedded digital watermark, or it is possible remove problems at the beginning of the following contents.

The recording medium having a digital watermark of this invention is a recording medium having a digital watermark, which is a signal generated according to specific rules, embedded in contents comprising digital data, and where a starting position of the embedded digital watermark (13a) is set in the contents (13) before a starting point of the contents (13).

With this recording medium having a digital watermark, the starting position of the embedded digital watermark in the contents is set before the starting point of the contents, so it is possible to nearly match the starting point of the contents with the point where the start of the embedded digital watermark is detected, even when there is a delay in detecting the digital watermark from the received contents. Therefore, it is possible to remove problems at the beginning of the contents. For example, in the case when the digital watermark (11a) for the previous contents indicates that copying is prohibited, it is possible to remove the problem of not being able to record the beginning of the contents, even though copying of the contents is allowed; or in the case when the digital watermark (11a) of the previous contents indicates that first-generation copying is allowed, it is possible to remove the problem of inserting a digital watermark at the beginning of the contents, indicating that the contents have already been copied, and scrambling the contents.

A difference between the starting position of the embedded digital watermark (13a) and a starting position of the contents (13) corresponds to or is greater than the delay in detecting the digital watermark (13a) in the contents (13).

In this case, it is possible to nearly match the starting point of the contents with the timing for detecting the end of the embedded digital watermark, or it is possible remove problems at the beginning of the contents.

The recording medium having a digital watermark this invention is a recording medium having a digital watermark, which is a signal generated according to specific rules, that is embedded in a plurality of continuous contents comprising digital data, and where a change position of the digital watermarks (11a, 12a or 12a, 13a) in adjacent contents (11, 12 or 12, 13) is set before a change position of the adjacent contents (11, 12 or 12, 13).

With this recording medium having a digital watermark, the change position of the digital watermarks is set in the adjacent contents before the change position of the adjacent contents, so it is possible to nearly match the point of changing from the previous contents to the following contents with the point where the change in digital watermarks in these contents is detected, even when there is a delay in detecting the digital watermarks in the received contents. Therefore, it is possible to remove problems at the end of the previous contents or at the beginning of the following contents. For example, in the case when the digital watermark (11a) for the previous contents indicates that copying is prohibited, it is possible to remove the problem of not being able to record the beginning of the following contents, even though copying of the following contents is allowed; or in the case when the digital watermark (11a) of the previous contents indicates that first-generation copying is allowed, it is possible to remove the problem of inserting a digital watermark at the beginning of the following contents, indicating that the contents have already been copied, and scrambling the contents.

In the case that of a plurality of continuous contents, copying is allowed for a previous contents, a starting position of the embedded digital watermark in following contents that follow the previous contents is set at a starting point of the following contents.

In this case, the area where the digital watermark is embedded in the following contents does not come in contact with the previous contents, so problems such as not being able to record the end part of the previous contents does not occur.

A difference between the change position of the digital watermarks (11a, 12a or 12a, 13a) and the change position of adjacent contents (11, 12 or 12, 13) corresponds to or is greater than the delay in detecting the digital watermarks (11a, 12a or 12a, 13a) in the received contents (11, 12 or 12, 13).

In this case, it is possible to nearly match the change in contents with the timing for detecting the change in digital watermarks, or it is possible to remove problems at the beginning of the following contents.

In order to more easily understand this invention, reference numbers have been used in the supplied drawings, however the present invention is not limited to the for shown in the drawings.

### BRIEF DESCRIPTION OF THE DRAWINGS

FIG. 1A is a diagram showing one example of the basic concept of the digital watermark embedding method of this invention;
FIG. 1B is a diagram showing another example of the basic concept of the digital watermark embedding method of this invention;
FIG. 2 is a diagram showing the flow of a digital video that is distributed from a television station;
FIG. 3 is a diagram showing a method of managing the generations of copying a digital video;
FIG. 4 is a block diagram showing a video transmission apparatus that is installed at a broadcast station;
FIG. 5 is a flowchart showing the process of transmitting video contents by the video transmission apparatus;
FIG. 6 is a flowchart showing the process of setting the watermark;
FIG. 7 is a diagram showing the timing at which the control data changes;
FIG. 8 is a flowchart showing the steps of the process used instead of the process shown in FIG. 6 and FIG. 7;
FIG. 9 is a diagram showing the timing at which the control data changes;
FIG. 10 is a drawing that explains the watermark;
FIG. 11 is a drawing that explains the watermark;
FIG. 12 is a schematic drawing of the PN-series generation circuit;
FIG. 13 is a schematic drawing of the PN-series generation circuit;
FIG. 14 is a diagram showing the configuration of a system that uses a second embodiment of the digital watermark embedding method;
FIG. 15 is a flowchart that shows the processing in a recording system;
FIG. 16 is a diagram showing the positional relationship between the video contents that are recorded on videotape and the control data (watermark).

### DESCRIPTION OF THE PREFERRED EMBODIMENTS

### - First Embodiment -

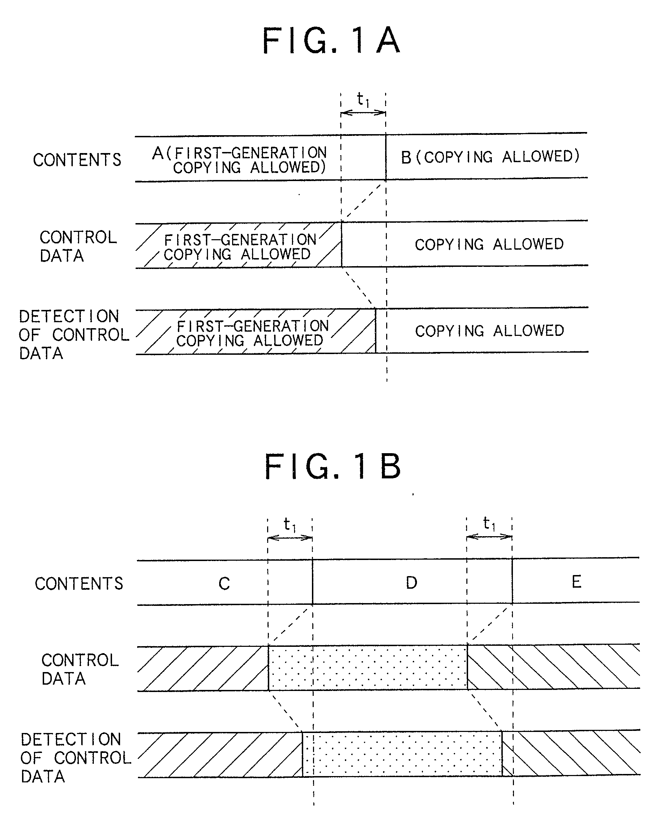

A first embodiment of the digital watermark embedding method of this invention will be explained with reference to the drawings FIG. 1 through FIG. 13. This embodiment shows an example of using video contents as the contents comprising digital data, however, this invention can also be applied to other contents comprising digital data, such as music contents.

First, the basic concept of the digital watermark embedding method of this invention will be explained with reference to FIG. 1A and FIG. 1B. FIG. 1A and FIG. 1B show one example of the digital watermark embedding method of this invention.

A major feature of the digital watermark embedding method of this invention, is that the timing of the end, start or change of the control data added to the distributed video contents for controlling copying of the video contents, comes before the timing of the end, start or change of the video contents.

In the example shown in FIG. 1A, embedding of the control data (watermark) ends at timing before the timing at which the video contents end. That is, the control data (watermark) that indicates that copying attributes of video contents A is prohibited is not inserted at the end section of video contents A, but the control data at this end section indicates that copying is allowed.

Therefore, the timing at which the end of the control data prohibiting copying is detected by the video recorder can be nearly matched with the timing of the end of the video contents received. In FIG. 1A copying is allowed for the following video contents B, so it is possible to record from the beginning of those contents.

In this case, the time (time difference t1) that the end of the control data precedes the change in video contents ideally matches the time required for the video recorder to detect the change in the control data in the video recorder. However, in actually, depending on the type of video recorder or the video image of the video contents, the time of detection may vary. Therefore, the time difference t1 can be set, for example, to be nearly the same as or a little longer than the normal maximum detection time of the video recorder used. In the case of setting the time difference t1 to be longer, the change in the control data is already detected by the video recorder at the starting point of the following video contents. Therefore, it is possible to avoid problems at the beginning of the following video contents.

Actually, since it is considered that there is a large demand to avoid conditions that would not allow recording of the beginning of video contents for which copying is allowed, it is preferred that the time difference t1 is set to be a little longer than the detection time for the video recorder to detect the control data. In other words, when the time difference t1 is set to be longer, the control data is not correctly identified at the end of the previous video contents, however, normally, for video contents such as a movie, data (such as movie credits) that are not so important to the copyright are located in this end section, so there is very little problem even when it becomes possible to record the video contrary to the control data for this section. However, in the case that it becomes impossible to record the beginning of the video contents, there is a large possibility that problems will occur, and it is necessary to avoid that kind of condition.

In the example shown in FIG. 1B, the timing at which the control data (watermark) changes is before the timing at which the video contents C, D, or E changes. That is, the control data (watermark) of the previous video contents is not inserted in the end section of the video contents, but the control data for following video is embedded the end section.

Therefore, the timing at which the control data is detected by the video recorder can be nearly matched with the timing at which the received video contents change. Ideally, in this case, similar to the example shown in FIG. 1A, the time (time difference t1) that the change of the control data precedes the change of the video contents is matched with the time required for the video recorder to detect the change in the control data, however, in order to avoid problems at the beginning of the following video contents, the time difference t1 can be set a little longer.

Next, the system used for the digital watermark embedding method of this invention will be explained in detail.

### (Restricting Recording and Copying of Digital Video)

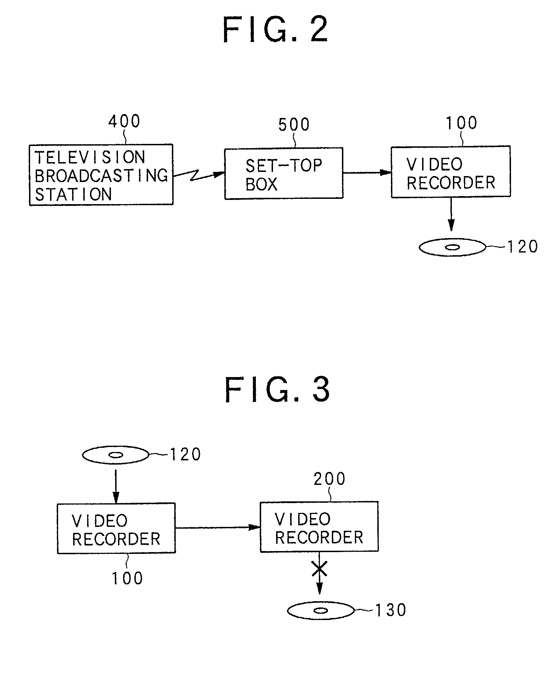

First, FIG. 2 and FIG. 3 will be used to explain the restrictions on recording and copying using the video recorder of this embodiment of the invention.

As shown in FIG. 2, digital video is distributed from a television broadcast station 400. In the step before distributing the video from the television broadcast station 400, a watermark (digital watermark) is embedded in digital video such as a movie for which it is necessary to restrict copying due to copyright reasons.

The digital watermarks of this embodiment include a watermark that indicates first-generation copying is allowed, and a watermark that indicates that copying is prohibited. First-generation copying is allowed for digital video embedded with a watermark indicating that first-generating copying is allowed, however, copying for the second generation on is not allowed. Copying is not allowed at all for digital video embedded with a watermark indicating that copying is prohibited. In the case that there is no watermark embedded in the digital video, copying of that digital video is allowed as desired.

For example, in the case that a watermark indicating that first-generation copying is allowed is embedded in the digital video that is distributed from the television broadcast station 400, the receiver of the digital video is allowed to record the distributed digital video onto an optical disk only one time, so it is possible to view the distributed video without putting constraints on broadcast time.

The digital video that is distributed from the television broadcast station 400 is received by a set-top box 500, and is then sent to the video recorder 100 from the set-top box 500. The video recorder 100 detects the watermark that indicates that first-generation copying is allowed and records that digital video onto an optical disk 120. When doing this, the video recorder 100 embeds a watermark in the digital video, which has been embedded indicating that first-generation copying is allowed, indicating that copying has been completed, then records that digital video onto an optical disk 120.

Also, as shown in FIG. 3, the video recorder 100 is able to read and play the digital video that was distributed from the television broadcasting station 400 and recorded on the optical disk 120, and output that digital video digitally to another video recorder 200 having the same configuration as the video recorder 100. However, since a watermark, indicating that copying is finished, is embedded in the digital video that has been recorded one time on the optical disk 120 by the video recorder 100, the video recorder 200 cannot record the digital video onto another optical disk 130. In other words, the video recorder 200 detects the watermark that is embedded in the digital video indicating that copying has been completed, and does not record that digital video. Copying of the digital video is restricted and generations of copying the digital video are managed in this way.

### (Explanation of the Video Transmission Apparatus)

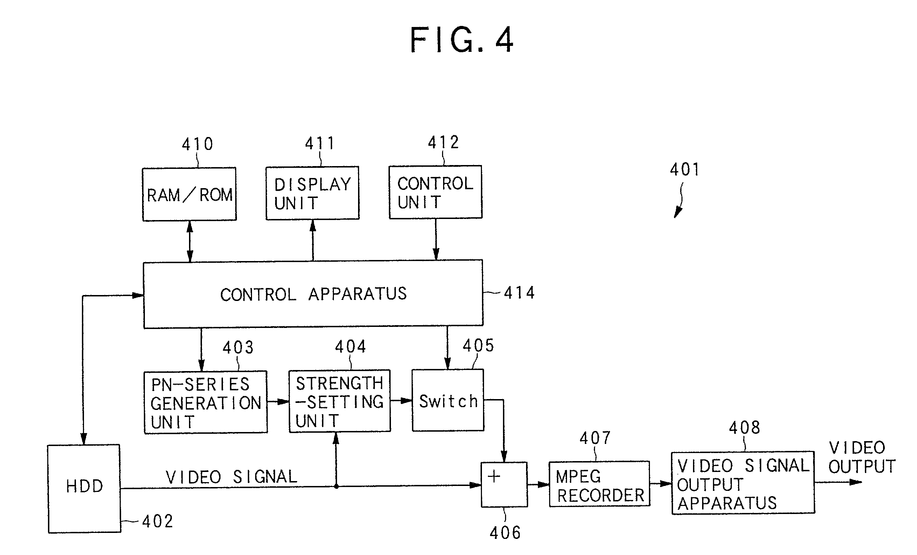

FIG. 4 is a block diagram showing the video transmission apparatus at the broadcast station. As described above, in this embodiment, the timing at which the video contents are changed is differed from the timing at which the control data indicating the attributes for copying the video contents is changed before distributing the video contents. The video transmission apparatus 401 performs the process of adding control data to the video contents data such that this condition is satisfied.

As shown in FIG. 4, the video transmission apparatus 401 is provided with: a hard disc drive apparatus 402 that drives the hard disc on which the video contents to be transmitted are saved; a PN-series generation unit 403 that generates a PN-series used for the control data; a strength setting unit 404 that amplifies the output signal from the PN-series generation unit 403 and sets the strength of that signal; a control switch 405 that controls adding or removing control data; and adding unit 406 that adds the video contents data and the control data; an MPEG encoder 407 that compresses the video contents data; a video signal output apparatus 408 that outputs the modulated video signal to the transmission antenna; a memory unit 410 having RAM and ROM; a display unit 411 that displays the specific data for the operator; a control unit 412 that receives controls from the operator; and a control apparatus 414 that controls the hard disc drive apparatus 402, PN-series generation unit 403, strength setting unit 404, control switch 405, adding unit 406, MPEG encoder 407, video signal output apparatus 408, memory unit 410, display unit 411 and control unit 412.

The hard disc drive apparatus 402 reads the video contents that are recorded on the hard disc. On the other and, the PN-series generation unit 403 generates a specified PN series (control data). The control apparatus 414 controls the start and end of generation of the PN series by the PN series generation unit 403.

### (Watermark Created from the PN Series)

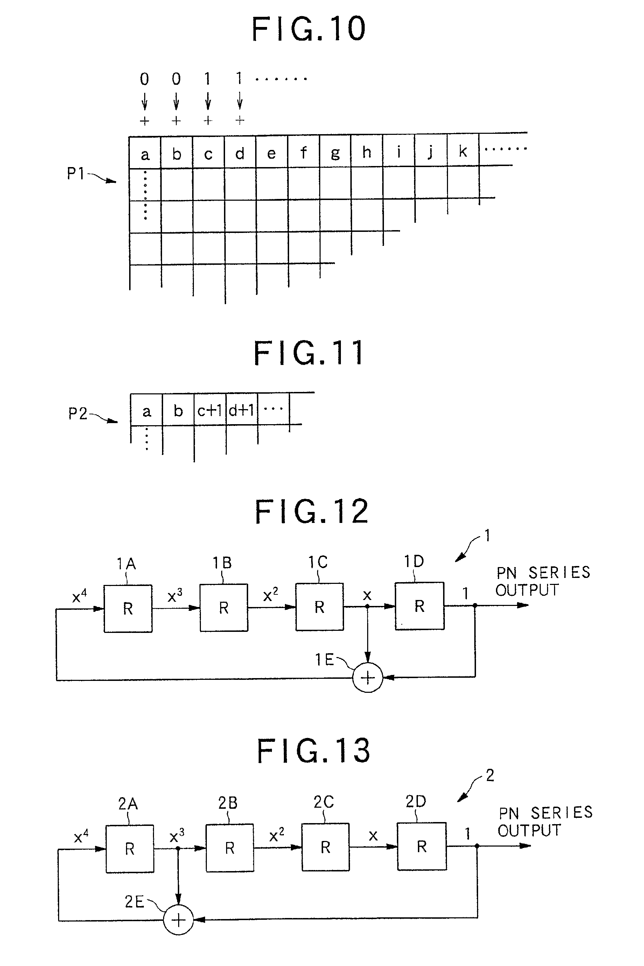

Next, the watermark that is embedded in the digital data will be explained using FIG. 10 to FIG. 13.

Data that express the brightness of each image of the digital video is included in the digital video. This data for expressing the brightness is, for example, 4 to 8-bit numerical values that correspond to each picture element of the image. In other words, the numerical values for expressing the brightness of each picture element are set individually (hereafter, the numerical values that express the brightness of the picture elements will be called brightness values). Using FIG. 10 to explain this in detail, the image P1 in FIG. 10 is one image of a digital video, and a, b, c, d, ... in the image P1 are brightness values that are set for the respective picture elements.

The watermark is a signal that is generated according to specific rules, for example, it is created according to a PN (Pseudorandom Noise) series and embedded in the image by adding PN-series codes to each of the brightness values of the picture elements. For example, "0011...." in FIG. 10 is the PN series of the watermark. By adding this PN series to the brightness values a, b, c, d, .... of the image P1, the brightness values become a, b, c+1. d+1, ... The watermark is embedded into the images of the digital video in this way.

The PN series of the watermark, for example, is a pseudorandom code sequence such as an M series, and is generated by giving initial values to the polynomial expression (generating expression) for generating the PN series. In this embodiment, the polynomial expression (generating expression) for generating the PN series, for example, is implemented as a PN-series generating circuit 1 such as shown in FIG. 12. The PN-series generating circuit 1 is provided with shift registers 1A through 1D and an adder 1E, and is placed in the PN-series generating unit 403. The PN series that is actually used has more shift registers such that the period of the series becomes longer.

Also, in this embodiment, two different PN series are generated, and one of these is used as the watermark indicating that first-generation copying is allowed, and the other is used as the watermark indicating that copying is prohibited. By changing either or both the polynomial expression and initial values, the arrangement of random code of the PN series changes. Therefore, it is possible to generate different PN series by changing either or both the polynomial expression and initial values.

For example, the PN-series generating circuit 1 shown in FIG. 12 generates the PN series used as the watermark for indicating that first-generation copying is allowed. On the other hand, the PN-series generating circuit 1 shown in FIG. 13 generates the PN series used as the watermark for indicating that copying is prohibited. The PN-series generating circuit 2 shown in FIG. 13 is implemented as the polynomial expression (generating expression) that differs from the polynomial expression (generating expression) that corresponds to the PN-series generating circuit 1, and is provided with shift registers 2 to 2D and adder 2E. The PN-series generating circuit 2 is also placed in the PN-series generating unit 403.

It can be clearly seen that the reason the polynomial expression corresponding to the PN-series generating circuit 1 is different than the polynomial expression corresponding to the PN-series generating circuit 2 is that connection of the shift registers and adder to the PN-series generating circuit 1 and PN-series generating circuit 2 is different. By using two PN-series generating circuits having different connection or construction (or in other words having polynomial expressions with different structure) in this way, it is possible to separately generate the watermark that indicates that first-generation copying is allowed, and the watermark that indicates that copying is prohibited.

It is also possible to use only the PN-series generating circuit 1 shown in FIG. 12 to separately generate the watermark that indicates that first-generation copying is allowed, and the watermark that indicates that copying is prohibited. In this case, two sets of initial values to be given to the PN-series generating circuit 1 are prepared. By assigning one of the two sets of initial values to the PN-series generating circuit 1, it is possible to generate the PN series for the watermark that indicates that first-generation copying is allowed, and by assigning the other set of initial values to the same PN-series generating circuit 1, it is possible to generate the PN series for the watermark the indicates that copying is prohibited. For example, when generating the PN series for the watermark that indicates that first-generation copying is allowed, the initial value '0011' is input to shift register 1A or 1D. On the other hand, when generating the PN series for the watermark that indicates that copying is prohibited, the initial value '0101' is input to shift register 1A or 1D.

### (Operation of the Strength-setting Unit)

The control data that are output from the PN-series generating unit 403 are input to the strength-setting unit 404 and amplified to a suitable strength. As shown in FIG. 4, the video data that are read by the hard disc drive apparatus 402 are also input to the strength-setting unit 404. In the strength-setting unit 404, the required strength for the control data is calculated according to the input video data.

The control data that are output from the strength-setting unit 404 are input to the control switch 405, The control apparatus 414 controls the switching ON or OFF of the control switch 405. Whether or not a watermark is embedded in the video contents is selected by switching the control switch 405. When the control switch is OFF, no watermark is added to the video contents regardless of the contents from the PN-series generating unit 403. In this case copying of the video is allowed.

Next, the processing by the strength-setting unit 404 will be explained.

The strength-setting unit 404 detects the status of the input image and changes the strength of the watermark according to the detected results. That is, the strength-setting unit 404 detects whether there is any large or small change in the brightness value set for each picture element of the image. When there is a large change in the brightness value, that image, for example, has a complex pattern, so the watermark does not stand out even though a watermark may be embedded in the image. Therefore, when there is a large change in the brightness value, the strength-setting unit 404 performs a process on the PN series that is output from the PN-series generating unit 403 in order to increase the strength of the watermark. For example, when the PN series is '0101...' for example, the series is changed to '0202...' or '0303...'. The strength-setting unit 404 then outputs the watermark (or in other words, PN series) with increased strength to the control switch 405.

On the other hand, when there is little change in the brightness value set for each picture element of the image, then that image is a flat image, for example, and it is easy for the watermark to stand out. Therefore, when there is little change in the brightness value, the strength-setting unit leaves the PN series that is output from the PN-series generating unit 403 as is and outputs it to the control switch 405.

### (Watermark Detection)

Next, detection of the watermark by the video recorder will be explained. As described, before the video recorder 100 records the received digital video onto an optical disk 120, it determines whether or not a watermark is embedded in the digital image, and also determines whether the watermark embedded in the digital video indicates that first-generation copying is allowed or indicates that copying is prohibited. The video recorder 100 detects the watermark and makes the judgment described above by the following method.

First, the PN series for the watermark indicating that first-generation copying is allowed is generated. Also, the codes of that PN series with the value '1' are selected, and the positions of those codes in the PN series are specified. Moreover, the picture elements corresponding to the positions of those codes are specified and the brightness values that are set for those picture elements are read. For example, when '0011...' is taken to be the PN series for the watermark that indicates that first-generation copying is allowed, the brightness values c and d of the image P1 are read. This process is performed for the entire image, and the total brightness value α1 of the read brightness values is calculated.

Next, the codes of the PN series for the watermark indicating that first-generation copying is allowed that are '0' are selected, and the positions of those codes in the PN series are specified. Furthermore, the picture elements corresponding to the positions of those codes are specified and the brightness values that are set for those picture elements are read. For example, when '0011...' is taken to be the PN series for the watermark that indicates that first-generation copying is allowed, the brightness values a and b of the image P1 are read. This process is performed for the entire image, and the total brightness value β1 of the read brightness values is calculated.

Next, the difference between the totals α1 and β1 is calculated. When a watermark indicating that first-generation copying is allowed has been embedded in the image, the difference between the totals α1 and (31 is comparatively large. This is because the total of all the brightness values whose value was increased by '1' by embedding a watermark indicating that first-generation copying is allowed, is α1, and the total of the brightness values whose value did not change by embedding a watermark indicating that first-generation copying is allowed, is β1. On the other hand, when a watermark indicating that first-generation copying is allowed is not embedded in the image, the difference between the totals α1 and β1 is comparatively small. Therefore, when the difference between the totals α1 and β1 is greater than a specified value, it is possible to determine that there is a watermark embedded in the image indicating that first-generation copying is allowed.

Next, the PN series for the watermark that indicates that copying is prohibited is generated. Also, the codes of that PN series with the value ' 1' are selected, and the positions of those codes in the PN series are specified. Moreover, the picture elements corresponding to the positions of those codes are specified and the brightness values that are set for those picture elements are read. This process is performed for the entire image, and the total brightness value α2 of the read brightness values is calculated.

Next, the codes of the PN series for the watermark indicating that copying is prohibited that are '0' are selected, and the positions of those codes in the PN series are specified. Furthermore, the picture elements corresponding to the positions of those codes are specified and the brightness values that are set for those picture elements are read. This process is performed for the entire image, and the total brightness value β2 of the read brightness values is calculated.

Next, the difference between the totals α2 and β2 is calculated. When a watermark indicating that copying is prohibited has been embedded in the image, the difference between the totals α2 and β2 is comparatively large. This is because the total of all the brightness values whose value was increased by '1' by embedding a watermark indicating that copying is prohibited is α2, and the total of the brightness values whose value did not change by embedding a watermark indicating that copying is prohibited is β2. On the other hand, when there is no watermark embedded in the image, or when there is a watermark embedded in the image indicating that first-generation copying is allowed, the difference between the totals α2 and β2 is comparatively small. Therefore, when the difference between the totals α2 and β2 is greater than a specified value, it is possible to determine that there is a watermark embedded in the image indicating that copying is prohibited.

When the results of the detection described above shows that the difference between both the totals α1 and β1 and totals α2 and β2 is less than the aforementioned threshold value, it is possible to determine that there is no watermark embedded in the image.

In this method of detecting the watermark, the characteristic that the total number of values in the PN-series sequence whose code is '1' and values whose code is '0' is nearly the same, is used. Furthermore, the codes that are '1' and codes that are '0' are evenly distributed in the PN series, so the characteristics that the brightness values of all of the picture elements in an image are divided into two groups according to whether the codes of the PN series are '1' or '0', and that the brightness values are evenly distributed with the group is used.

Also, in this method of detecting the watermark, in order to accurately identify the PN series for the watermark indicating that first-generation copying is allowed, and the PN series for the watermark indicating that copying is prohibited, it is preferred that the PN series for the watermark indicating that first-generation copying is allowed, and the PN series for the watermark indicating that copying is prohibited be orthogonal. When both PN series are orthogonal, for example, when the brightness values of all of the picture elements in an image in which the PN series embedded with a watermark indicating that copying is prohibited are divided into two groups based on the PN series for the watermark indicating that first-generation copying is allowed, the codes of the PN series for the watermark indicating that copying is prohibited are evenly distributed in each group. As a result, the difference between the totals α1 and β1 becomes comparatively small. Similarly, when the brightness values of all of the picture elements in an image in which the PN series embedded with a watermark indicating that first-generation copying is allowed are divided into two groups based on the PN series for the watermark indicating that copying is prohibited, the codes of the PN series for the watermark indicating that first-generation copying is allowed are evenly distributed in each group. As a result, the difference between the totals α2 and β2 becomes comparatively small.

### (Processing in the Video Transmission Apparatus)

Next, the steps that are executed in the processing of the video transmission apparatus will be explained in detail.

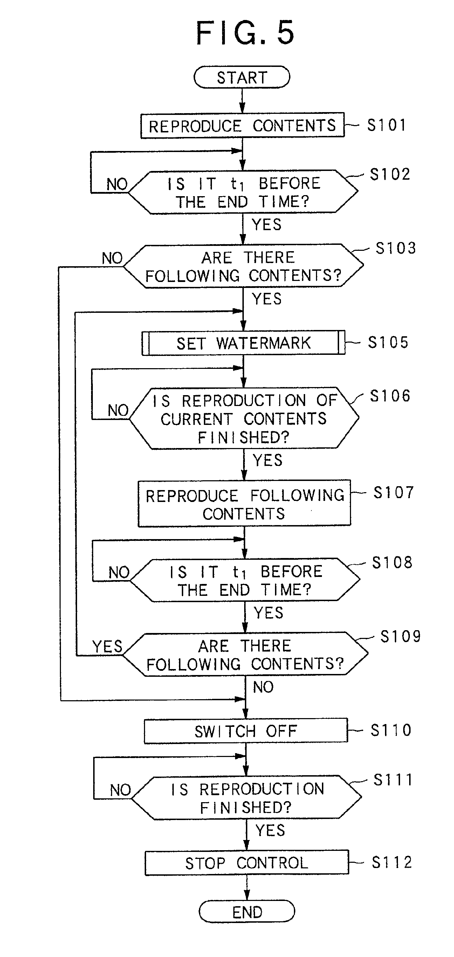

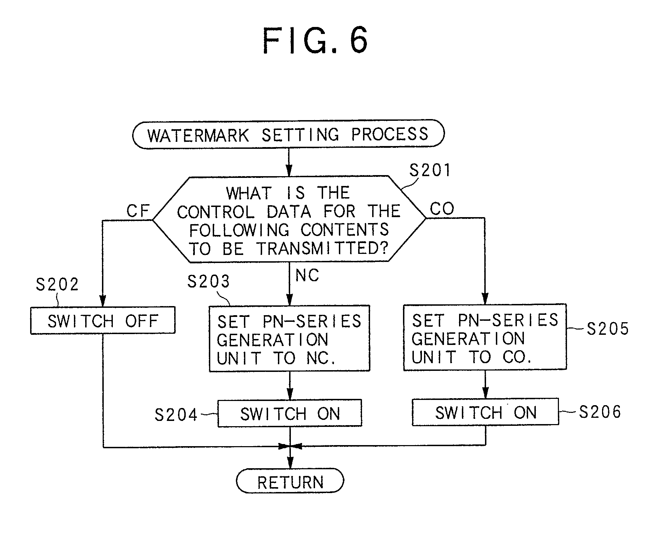

FIG. 5 is a flowchart showing the process of transmitting video contents by the video transmission apparatus, and FIG. 6 is a flowchart showing the process of setting the watermark.

First, in step S101 in FIG. 5, transmission (reproduction) of the video contents starts. The control data (watermark) at this time is the data corresponding to the video contents being transmitted.

In step S102, the time until the end time of the video contents being reproduced is judged as to whether or not it is less than t1. When the time is not less than t1 (NO), step S102 is repeated, and when the time is less than t1 (YES), processing advances to step S103.

In step S103, whether or not there are video contents following the video contents currently being reproduced is determined, and when there are following video contents (YES), processing advances to step S105, and when there are no following video contents (NO), processing jumps to step S110.

In step S105, the process for setting the watermark is executed as shown in FIG. 6. In step S201 of the watermark setting process, the control data to be added to the following contents are determined, and when the control data allow copying (CF), processing advances to step S202, when the control data prohibit copying (NC), processing advances to step S203, and when the control data allow first-generation copying (CO), processing advances to step S205.

When processing advances to step S202, the control switch 405 is set to OFF and processing returns to step S106 in FIG. 5.

When processing advances to step S203, the control data generated by the PN-series generating unit 403 is set to prohibit copying. Next, in step S204, the control switch 405 is set to ON, and then processing returns to step S106 in FIG. 5.

When processing advances to step S205, the control data generated by the PN-series generating unit 403 is set to allow first-generation copying. Next, in step S206, the control switch 405 is set to ON, and then processing advances to step S106 in FIG. 5.

Next, in step S106, whether or not transmission (reproduction) of the video contents currently being transmitted is finished is determined. When transmission is finished (YES), processing advances to step S107, and when transmission is not yet finished (NO), processing returns to step S106.

In step S107, transmission (reproduction) of the following video contents starts. Next, in step S108, the time until the end time of the video contents being reproduced is judged as to whether or not it is less than t1. When the time is not less than t1 (NO), step S108 is repeated, and when the time is less than t1 (YES), processing advances to step S109.

In step S109, whether or not there are video contents following the video contents currently being reproduced is determined, and when there are following video contents (YES), processing returns to step S105, and when there are no following video contents (NO), processing advances to step S110.

In step S110, the control switch 405 is set to OFF. In step S111 whether or not the video contents being transmitted (reproduced) is finished is determined, and when transmission is finished (YES), processing advances to step S112, and when transmission is not yet finished (NO), step S111 is repeated. In step S112, the specified process that is required when transmission of the video contents is finished is executed, then the process shown in FIG. 5 ends.

FIG. 7 shows the timing at which the control data that is added by the process described above changes. As shown in FIG. 7, the control data that are added to the video contents change at timing that is on time t1 earlier than the change of the video contents. Therefore, it is possible to prevent the detection of the change of control data by the video recorder 100 from being delayed later than the change of the video contents, and thus problems such as not being able to record the beginning of the following video contents are avoided.

In FIG. 7, the first contents 11, second contents 12 and third contents 13 are transmitted continuously in order. Also, the respective control data indicating that first-generation copy is allowed, indicating that copying is allowed, and indicating that copying is prohibited, 11a, 12a and 13a, changes in order at a timing that comes at time t1 earlier than the timing at which the contents 11, 12 and 13 change.

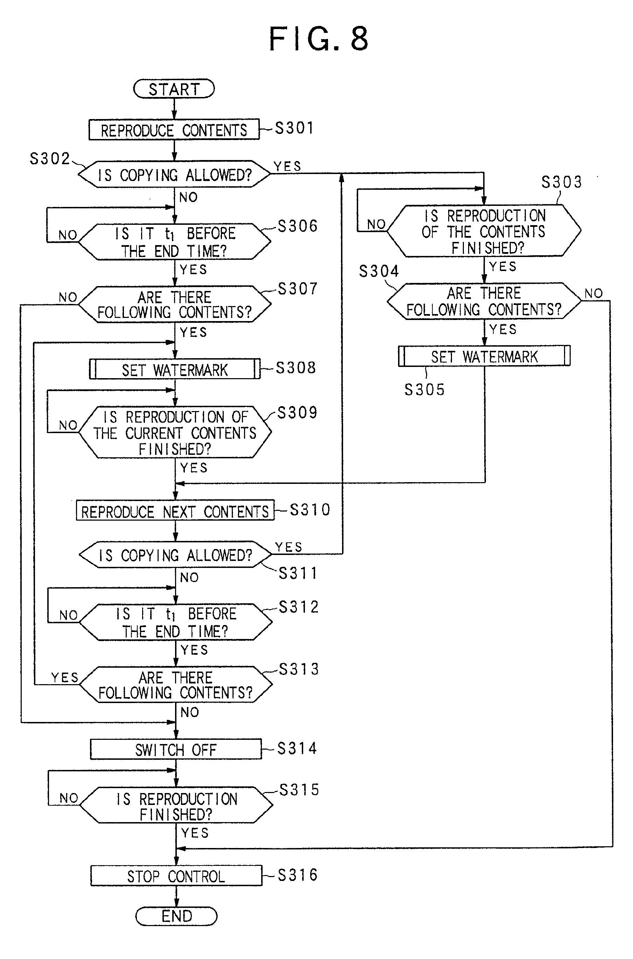

The processing shown in FIG. 8 can be used in the place of the processing shown in FIG. 6 and FIG. 7. FIG. 8 is a flowchart showing the steps of the process in this case.

First, in step S301 in FIG. 8, transmission (reproduction) of the video contents starts. The control data (watermark) at this time corresponds to the video contents that are being transmitted.

In step S302, the control data of the video contents that are currently being transmitted is judged as to whether or not it indicates that copying is allowed, and when copying is allowed (YES), processing advances to step S303, however when copying is not allowed (NO), processing advances to step S306.

In step S303, whether or not transmission of the video contents currently being transmitted is finished is determined, and when transmission is finished (YES), processing advances to step S304, however when transmission is not yet finished, step S303 is repeated.

In step S304, whether or not there are video contents that follow the current video contents is determined, and when there are following video contents (YES), processing advances to step S305, and when there are no following video contents (NO), processing jumps to step S316.

In step S305, the process shown in FIG. 6 for setting the watermark is executed, then processing advances to step S310. The process for setting the watermark was explained above, so an explanation here is omitted.

On the other hand, when it is determined in step S302 that copying is not allowed (NO) and processing advances to step S306, the time until the end time of the video contents being reproduced is judged as to whether or not it is less than t1. When the time is not less than t1 (NO), step S306 is repeated, and when the time is less than t1 (YES), processing advances to step S307.

In step S307, whether or not there are video contents that follow the current video contents being reproduced is determined, and when there are following video contents (YES), processing advances to step S308, and when there are no following video contents (NO), processing jumps to step S314.

In step S308, the process shown in FIG. 6 for setting the watermark is executed, then processing advances to step S309. The process for setting the watermark was explained above, so an explanation here is omitted.

Next, in step S309, whether or not transmission (reproduction) of the video contents currently being transmitted is finished is determined, and when transmission is finished (YES), processing advances to step S310, however, when transmission is not yet finished (NO), step S309 is repeated.

In step S310, transmission (reproduction) of the following video contents starts. Then, in step S311, the control data of the video contents currently being transmitted is judged as to whether or not it indicates that copying is allowed, and when copying is allowed (YES), processing advances to step S303, and when copying is not allowed (NO), processing advances to step S312. The process for the case when processing advances to step S303 was described above and will be omitted here.

In step S312, the time until the end time of the video contents being reproduced is judged as to whether or not it is less than t1. When the time is not less than t1 (NO), step S312 is repeated, and when the time is less than t1 (YES), processing advances to step S313.

In step S313, whether or not there are video contents that follow the current video contents being reproduced is determined, and when there are following video contents (YES), processing returns to step S308, and when there are no following video contents (NO), processing advances to step S314.

In step S314, the control switch 405 is set to OFF. In step S315, whether or not transmission (reproduction) of the video contents currently being transmitted is finished is determined, and when transmission is finished (YES), processing advances to step S316, however, when transmission is not yet finished (NO), step S315 is repeated. In step S316, the specified process that is required when transmission of the video contents is finished is executed, then the process shown in FIG. 8 ends.

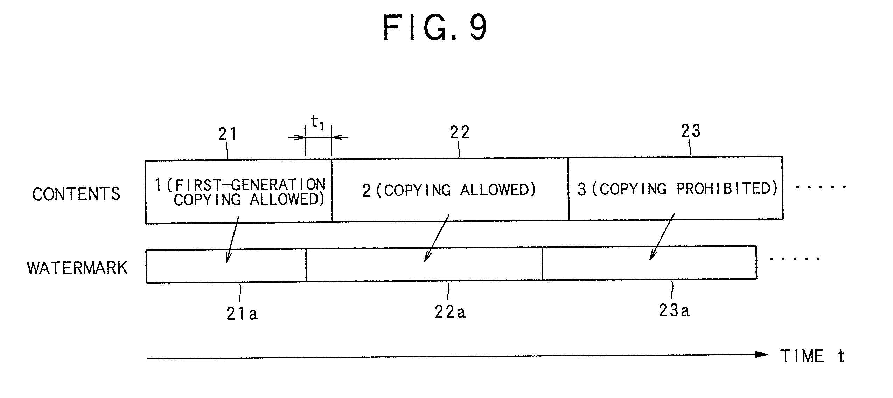

FIG. 9 shows the timing at which the control data added by the processing above changes. In FIG. 9, the first contents 21, second contents 22 and third contents 23 are transmitted continuously in order. Also, the respective control data 21a, 22a and 23a indicating that first-generation copy is allowed, indicating that copying is allowed, and indicating that copying is prohibited, change in order.

As shown in FIG. 9, when the control data of the previous video contents are other than those indicating that copying is allowed, the control data added to the video contents changes at timing that comes at a time t1 earlier than the timing when the video contents change to the following video contents. Also, when the control data of the previous video contents indicate that copying is allowed, the control data added to the video contents changes at the same time that the video contents changes to the following video contents (second video contents 22 to third video contents 23).

In the example shown in FIG. 7, when the control data of the previous video contents indicate that copying is allowed, the control data changes to that of the following content while the previous video contents are being transmitted, so the video recorder quickly detects the change in the control data and there is a possibility that it will be unable to record the end portion of the preceding video contents. On the other hand, in the example shown in FIG. 9, when the control data of the previous video contents indicate that copying is allowed, the control data added to the video contents change at the same time the video contents change to the following contents, so it is possible to record the previous video contents all the way to the end.

At this time, during the time until the control data, for the following video contents (third contents 23) for which copying is prohibited, is detected, the beginning of the video contents is recorded, however, more important than this is that it is possible to record the video signal for which copying is allowed.

### - Second Embodiment -

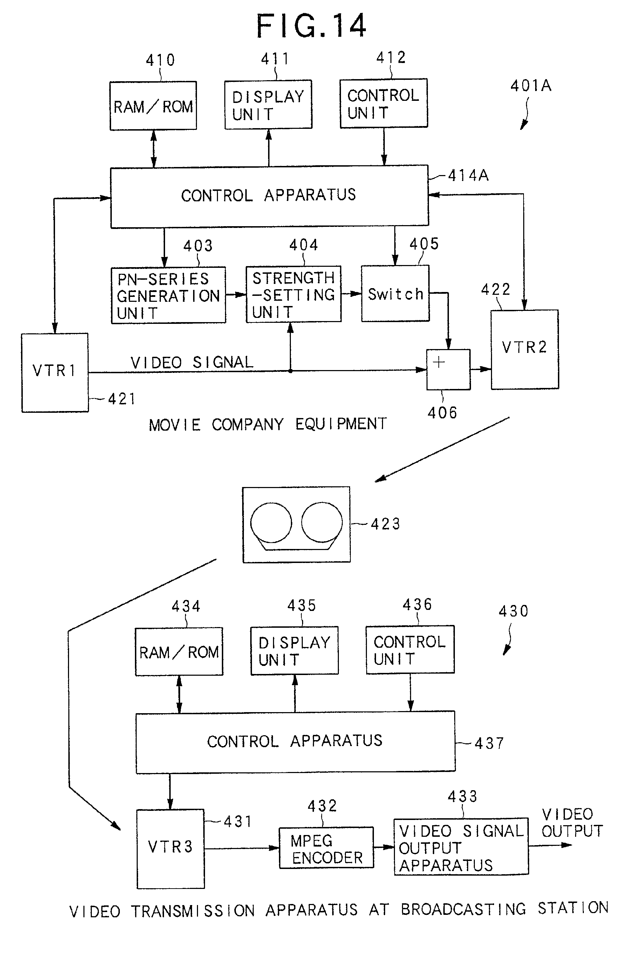

Next, a second embodiment of electronic watermark embedding method of this invention is explained when reference to FIG. 14 to FIG. 16.

FIG. 14 shows the configuration of a system that uses this second embodiment of the digital watermark embedding method. As shown in FIG. 14, this system is provided with, for example, a recording system 401A that is part of the movie company equipment, and the video transmission apparatus 403 at a broadcasting station.

### (Recording System)

The recording system 401A will be explained below. This recording system 401A is provided with the same element or elements that correspond to the video transmission apparatus of the first embodiment, so the same code numbers will used for parts that are the same or correspond with each other, and any redundant explanation will be omitted.

FIG. 14 shows a block diagram of the recording system 401A. In this embodiment, the timing of the end of the video contents is differed from the timing of the end of the control data that indicate the attributes related to copying the video contents, and the video contents are recorded on videotape. The recording system 401A performs the process of adding control data to the video contents data such that the aforementioned condition is satisfied.

As shown in FIG. 14, the video transmission apparatus 401A is provided with: a video recorder 421 that reads the video contents to be recorded from a video tape; a video recorder 422 that records the video contents onto a video tape together with the electronic watermark; a PN-series generation unit 403 that generates a PN series to be used as control data; a strength setting unit 404 that amplifies the output signal from the PN-series generation unit 403 and sets the strength of that signal; a control switch 405 that controls adding or removing control data; and adding unit 406 that adds the video contents data and the control data; a memory unit 410 having RAM and ROM; a display unit 411 that displays specific data for the operator; a control unit 412 that receives controls from the operator; and a control apparatus 414A that controls the video recorder 421 on the reproduction side, video recorder 422 on the recording side, PN-series generation unit 403, strength setting unit 404, control switch 405, adding unit 406, memory unit 410, display unit 411 and control unit 412.

Next, the operation of the recording system 401A will be explained. The video recorder 421 reads the video contents that were recorded on videotape. Also, the PN-series generation unit 403 generates a specific PN series (control data). The control apparatus 414A controls the start and end of generating the PN series by the PN-series generation unit 403.

The control data that are output from the PN-series generation unit 403 are input to the strength-setting unit 404 and amplified to a suitable strength. As shown in FIG. 14, the video data that are read by the video recorder 421 are also input to the strength-setting unit 404. The strength-setting unit 404 calculates the required strength for the control data according to the input video data.

The control data that are output from the strength-setting unit 404 are input to the control switch 405. Setting the control switch 405 ON or OFF is controlled by the control apparatus 414A. By switching the control switch 405, it is possible to select whether or not to embed a watermark in the video contents. When the control switch 405 is switched OFF, no watermark is added to the video contents regardless of the processing contents from the PN-series generation unit 403.

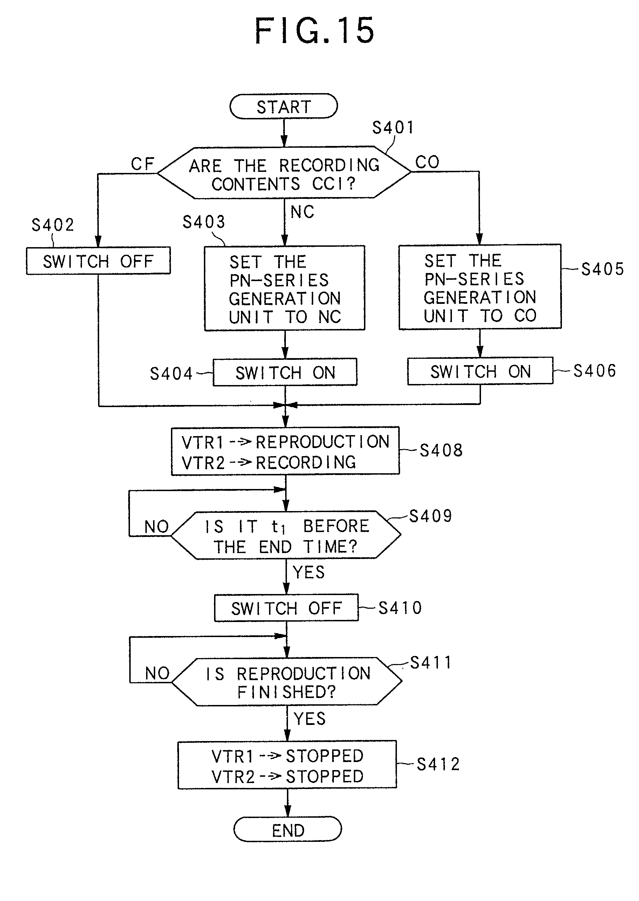

FIG. 15 is a flowchart showing the processing of the recording system 401A.

In step S401 in FIG. 15, the control data of the recording contents that are reproduced by the video recorder 421 are judged. When it is determined that the control data indicate that copying is allowed (CF), processing advances to step S402; when it is determined that the control data indicate that copying is prohibited (NC), processing advances to step S403, and when it is determined that the control data indicate that first-generation copying is allowed (CO), processing advances to step S405.

In step S402, the control switch 405 is switched OFF and then processing advances to step S408.

In step S403, the PN series that is generated by the PN-series generation unit 403 is set to prohibit copying, and then in step S404 the control switch is switched ON and processing advances to step S408.

In step S405, the PN series that is generated by the PN-series generation unit 403 is set to allow first-generation copying, and then in step S406 the control switch is switched ON and processing advances to step S408.

In step S408, reproduction by the video recorder 421 and recording by the video recorder 422 start. The videotape on which video contents are recorded is set into the video recorder 421 beforehand, and a blank videotape is set in the video recorder 422.

Next, in step S409, the time until the end time of the video contents is judged as to whether or not it is less than t1, and when it is determined that the time is less than t1 (YES), processing advances to step S410, and when it is determined that the time is not less than t1 (NO), step S409 is repeated. In step S410, the control switch is switched OFF, and in step S411, the video contents are judged as to whether the end has been reached or whether reproduction is finished. When it is determined that the end has been reached or reproduction is finished (YES), processing advances to step S412, and when it is determined that the end has not been reached or reproduction is not finished (NO), step S411 is repeated. Next, in step S412, reproduction by the video recorder 421 and recording by the video recorder 422 stop, and the processing shown in FIG. 15 ends.

By the processing described above, a videotape 423 (see FIG. 14) is created on which the video contents and watermark are recorded.

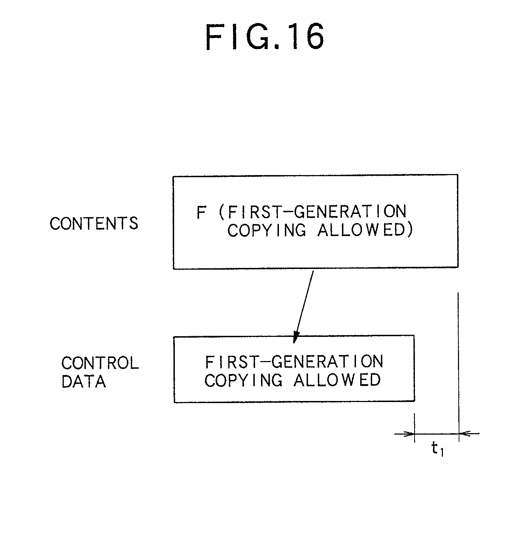

FIG. 16 is a drawing showing the positional relationship between the video contents that are recorded on the videotape 423 and the control data (watermark). As shown in FIG. 16, the end of the control data is positioned at a time t1 before the end of the video contents. Therefore, even when contents, for which copying is allowed, are broadcast following these video contents, problems such as not being able to record the beginning of those contents do not occur.

### (Video Transmission Apparatus)

Next, the video transmission apparatus 430 shown in FIG. 14 will be explained.

The video transmission apparatus 430 is provided with: a video recorder 431 in which a video tape 423 is set; an MPEG encoder 432 that compresses the signal output from the video recorder 431; a video signal output apparatus 433 that modulates the output signal from the MPEG encoder 432 and outputs it to the antenna; a memory apparatus 434 that contains RAM and ROM; a display unit 435 that provides a display to the operator; a control unit 436 that receives controls from the operator; and a control apparatus 437 that controls the video recorder 431, MPEG encoder 432, video signal output apparatus 433, memory apparatus 434, display unit 435 and control unit 436.

The MPEG encoder 432 compresses the video signal that is output from the video recorder 431. This compressed video signal is modulated by the video-signal output apparatus 433 and transmitted via the antenna.

The video transmission apparatus 430 of this second embodiment differs from the video transmission apparatus 401 (See FIG. 4) of the first embodiment, and it transmits the video together with the watermark that was recorded beforehand on the videotape without changing the construction in order to add the control data (watermark).

However, in this embodiment, by placing the end of the control data at a time t1 before the end of the video contents in the data that are recorded on the video tape in this way, it compensates for any delay in detecting the control data when recording the received video. Therefore, problems such as not being able to record the beginning of the contents that are broadcast following the current video contents do not occur even without performing special processing in the video transmission apparatus.

In this second embodiment, the case of placing the end of the control data before the end of the video contents was explained, however, the concept of this invention of adjusting the positional relationship between the video contents and the control data can also be widely applied to the case of recording contents to a recording medium such as a video tape or DVD. The configuration of placing the starting position of the control data with respect to the contents before the starting point of the contents, or the configuration of placing the change position of the control data before the change position of adjacent contents can also be applied to the recording medium.

In the embodiments described above, the PN series for the watermark was added to the brightness value that is set for each picture element of the image, however, the invention is not limited to this, and the PN series for the watermark can be added to another value that is set for each picture element.

Also, the PN series for the watermark is not limited to being an M series. It is also possible to use another random series such as gold code.

Moreover, in the aforementioned embodiment, an example of creating the watermark from a PN series was given, however, the invention is not limited to this. For example, the watermark may be constructed by another signal in which code is arranged such that it is not possible to easily determine the rules of the signal in the case when there are rules for the random or close to random codes or code array.

Furthermore, in the aforementioned embodiments, an example of the case where the codes of the PN series corresponds one-to-one with the pictures elements of an image was given, however the invention is not limited to this. For example, the image can be divided into a plurality of areas made up of a plurality of adjacent picture elements, and the codes of the PN series can correspond one-to-one with these areas. Here, an example of embedding the PN series '0101...' for the watermark indicating that copying is prohibited in an image that is divided into square areas containing four joining picture elements will be given. In this case, '0' is added to all of the brightness values of the four picture elements that are contained in the first area of the image. Also, '1' is added to all of the brightness values of the four picture elements that are contained in the second area of the image. By having one-to-one correspondence between the codes of the PN series and the plurality of areas of picture elements in this way, it is possible for the watermark to remain in the digital video even when the digital video is filtered or compressed.

## Claims

1. A digital watermark embedding method of embedding a digital watermark (11a), which is a signal generated according to specific rules, in contents (11) comprising digital data, **characterized in that** the method comprises the processes of:
setting an end position of said embedded digital watermark in said contents at said determined position.

2. The digital watermark embedding method according to claim 1, wherein
a difference (t1) between the end position of said embedded digital watermark (11a) and the end of said contents (11) corresponds to or is greater than the delay in detecting said digital watermark (11a).

3. A digital watermark embedding method of embedding a digital watermark (13a), which is a signal generated according to specific rules, in contents (13) comprising digital data, **characterized in that** the method comprises the processes of:
determining a position before a starting point of said contents; and
setting a starting position of said embedded digital watermark (13a) in said contents (13) at said determined position.

4. The digital watermark embedding method according to claim 3, wherein
a difference (t1) between the starting position of said embedded digital watermark (13a) and a starting position of said contents (13) corresponds to or is greater than the delay in detecting said digital watermark at the receiver side.

5. A digital watermark embedding method of embedding digital watermarks (11a, 12a or 12a, 13a), which are signals generated according to specific rules, in a plurality of continuous contents (11, 12, 13) comprising digital data, **characterized in that** the method comprises the processes of:
determining a position before a change position of adjacent contents (11, 12 or 12, 13); and
setting a change position of said digital watermarks (11a, 12a or 12a, 13a) in said adjacent contents (11, 12 or 12, 13) at said determined position.

6. The digital watermark embedding method according to claim 5 wherein in the case that out of a plurality of continuous contents, copying is allowed for previous contents, the setting process sets a starting position of said embedded digital watermark in following contents that follow the previous contents, at a starting point of the following contents.

7. The digital watermark embedding method according to claim 5 wherein
a difference (t1) between the change position of said embedded digital watermarks (11a, 12a or 12a, 13a) and the change position of said adjacent contents (11, 12 or 12, 13) corresponds to or is greater than the delay in detecting said digital watermarks (11a, 12a or 12a, 13a).

8. The digital watermark embedding method according to any one of claims 1 to 7, wherein
said digital watermark is data indicating that copying of said contents is allowed one time only, or is data indicating that copying of said contents is prohibited.

9. A digital watermark embedding apparatus (401) that embeds a digital watermark (11a), which is a signal generated according to specific rules, in contents (11) comprising digital data, **characterized in that** the apparatus comprises:
a determining device (414) for determining a position before an end of said contents; and
a setting device (414) for setting an end position of said embedded digital watermark (11a) in said contents (11) at said determined position.

10. The digital watermark embedding apparatus according to claim 9 wherein
a difference (t1) between the end position of said embedded digital watermark (11a) and the end of said contents (11) corresponds to or is greater than the delay in detecting said digital watermark.

11. A digital watermark embedding apparatus (401) that embeds a digital watermark (13a), which is a signal generated according to specific rules, in contents (13) comprising digital data, **characterized in that** the apparatus comprises:
a determining device (414) for determining a position before the starting point of said contents (13); and
a setting device (414) for setting a starting position of said embedded digital watermark (13a) in said contents (13) at said determined position.

12. The digital watermark embedding apparatus (401) according to claim 11 wherein
a difference (t1) between the starting position of said embedded digital watermark (13a) and a starting position of said contents (13) corresponds to or is greater than the delay in detecting said digital watermark.

13. A digital watermark embedding apparatus (401) that embeds digital watermarks, which are signals generated according to specific rules, in a plurality of continuous contents (11, 12, 13) comprising digital data, **characterized in that** the apparatus comprises:
a determining device (414) for determining a position before a change position of said adjacent contents (11, 12 or 12, 13); and
a setting device (414) for setting a change position of said digital watermarks (11a, 12a or 12a, 13a) in adjacent contents (11, 12 or 12, 13) at said determined position.

14. The digital watermark embedding apparatus (401) according to claim 13 wherein in the case that out of a plurality of continuous contents, copying is allowed for previous contents, the setting device sets a starting position of said embedded digital watermark in following contents that follow the previous contents, at a starting point of the following contents.

15. The digital watermark embedding apparatus (401) according to claim 13 wherein
a difference (t1) between the change position of said embedded digital watermarks (11a, 12a or 12a, 13a) and the change position of said adjacent contents (11, 12 or 12, 13) corresponds to or is greater than the delay in detecting said digital watermarks.

16. The digital watermark embedding apparatus (401) according to any one of claims 9 to 15, wherein
said digital watermark is data indicating that copying of said contents is allowed one time only, or is data indicating that copying of said contents is prohibited.

17. A recording medium (120) having an embedded a digital watermark (11a), which is a signal generated according to specific rules, that is embedded in contents (11) comprising digital data, **characterized in that**
an end position of said embedded digital watermark (11a) in said contents (11) is set before an end of said contents (11).

18. The recording medium (120) according to claim 17 wherein the contents are distributed from a transmitter side to a receiver side, and a difference (t1) between the end position of said embedded digital watermark (11a) and the end of said contents (11) corresponds to or is greater than the delay in detecting said digital watermark (11a).

19. A recording medium (120) having an embedded a digital watermark (13a), which is a signal generated according to specific rules, that is embedded in contents (13) comprising digital data, wherein
a starting position of said embedded digital watermark (13a) is set in said contents (13) before a starting point of said contents (13).

20. The recording medium (120) according to claim 19 wherein a difference (t1) between the starting position of said embedded digital watermark (13a) and a starting position of said contents (13) corresponds to or is greater than the delay in detecting said digital watermark (13a).

21. A recording medium (120) having digital watermarks (11a, 12a, 13a), which are signals generated according to specific rules, that are embedded in a plurality of continuous contents (11, 12, 13) comprising digital data, wherein
a change position of said digital watermarks (11a, 12a or 12a, 13a) in adjacent contents (11, 12 or 12, 13) is set before a change position of the adjacent contents (11, 12 or 12, 13).

22. The recording medium (120) according to claim 21 wherein in the case that out of a plurality of continuous contents, copying is allowed for a previous contents, a starting position of said embedded digital watermark in following contents that follow said previous contents is set at the starting point of the following contents.

23. The recording medium (120) according to claim 21 wherein and a difference (t1) between the change position of said embedded digital watermarks (11a, 12a or 12a, 13a) and the change position of said adjacent contents (11, 12 or 12, 13) corresponds to or is greater than the delay in detecting said digital watermarks (11a, 12a or 12a, 13a).

24. The recording medium (120) according to any one of claims 17 to 23 wherein
said digital watermark is data indicating that copying of said contents is allowed one time only, or is data indicating that copying of said contents is prohibited.
